(19) Europäisches Patentamt
European Patent Office
Office européen des brevets

(11) Publication number: **0 455 092 A2**

# (12) EUROPEAN PATENT APPLICATION

(21) Application number: 91106463.2

(51) Int. Cl.5: C08J 3/22

(22) Date of filing: 22.04.91

(30) Priority: 23.04.90 US 512411
12.03.91 US 665928

(43) Date of publication of application:
06.11.91 Bulletin 91/45

(84) Designated Contracting States:
AT BE CH DE DK ES FR GB GR IT LI LU NL SE

(71) Applicant: UNION CARBIDE CHEMICALS & PLASTICS TECHNOLOGY CORPORATION,
Three Cristina Centre
201 North Walnut Street
Wilmington, Delaware 19801(US)

(72) Inventor: Brewer, Gregory A.
156 Taylor Road
Dunbar, West Virginia 25064(US)
Inventor: Samuels, Sari-Beth
27 Romopock Court
Indian Field, New Jersey 07446(US)
Inventor: Swasey, Chester Clinton
35 Country Road
Demarest, New Jersey 07626(US)
Inventor: Fraser, William Allen
Ellen Avenue, Box 429
Mahopac, New York 10541(US)
Inventor: Fazzari, Anthony M.
9 Stone Crop Lane
Wilton, Connecticut 06897(US)
Inventor: Blumberg, Morris
463 Martling Avenue
Tarrytown, New York 10591(US)
Inventor: Leung, Pak Sand
15 Woodland Road
Highland Mills, New York 10930(US)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
W-8000 München 40(DE)

## (54) Suspensions of polymer additives in functional fluids and thermoplastic resin compositions containing same.

(57) Stable dispersions of a solid phase in a functional fluid and the addition of the stable dispersion to thermoplastic polymers. The resultant thermoplastic polymer compositions, which are characterized by improved properties, can be formed into products of desired configuration.

EP 0 455 092 A2

This invention relates to suspensions of polymer additives in functional fluids. The suspensions of the present invention are characterized by improved stability and are of a viscosity such that they can be easily and accurately metered to thermoplastic resins by conventional pumping means. In the case of suspensions, which contain stabilizers, the resultant thermoplastic resin compositions are characterized by improved resistivity to thermal, oxidative and/or photo-degradation.

When manufacturing products using thermoplastic resins such as polyolefins, various additives are generally included to affect color, to affect physical properties, to ease processability, and to inhibit oxidation and other types of degradation so as to stabilize the physical characteristics of the resin and thus prolong the life expectancy of the resin product. For example, polyolefins tend to be susceptible to degradation through various mechanisms including those exacerbated by the presence of catalyst residues, those induced by high temperature exposure, those associated with high levels of mechanical shear and those initiated by exposure, in the presence of oxygen, to various wave lengths of electromagnetic radiation. Such polymers are generally protected from such degradation by adding various stabilizers which have been observed to delay the degradation process. Primary antioxidants such as octadecyl-3-(3' ,5'-di-tert-butyl-4'-hydroxyphenyl) propionate and secondary antioxidants such as IRGAFOS$^R$ 168, which are powders at room temperature, are often used.

The effectiveness in a thermoplastic resin of any additive, such as an antioxidant or other stabilizer, is dependent upon the particular additive used and its level of use. Equally important is the uniformity by which the additive is dispersed in the thermoplastic resin system. For any particular additive, and stabilizers especially, its ultimate effectiveness typically will vary with the uniformity of its dispersion in the polymer.

The nature of the additive dispersion also may have other effects on the properties of the thermoplastic resin. For example, a poorly dispersed additive may contribute to poor mechanical properties, such as reduced tensile and tear strengths, reduced resistance to low temperature flexing and a lower elongation. Poor dispersions also may affect electrical characteristics of a resin in those applications where such properties are important, for example, by reducing the breakdown voltage strength of a polyolefin dielectric and may contribute to electrical losses by increasing power factor and dielectric constant.

A number of procedures have been used in the prior art to incorporate stabilizers and other additives into polymer systems. In one approach, an additive is added during manufacture of the raw polymer. While this approach can provide reasonably good dispersion of the additive in the polymer, constraints imposed by reaction conditions encountered during formation of the polymer drastically limit both the amount and particularly the types of additives employable, particularly in the case of stabilizers.

In another method, the resin, in molten form, and additives are mixed in a high shear mixer. To obtain an acceptable dispersion, this system requires relatively high shear forces for substantial time periods at elevated temperatures sufficient to form a polymer melt. Since many additives in common use have high melting points, they do not melt during processing and often form agglomerates with themselves or with other components in the composition. Such agglomerates are not easily broken during processing, even at high shear rates, and thus contribute to non-uniformity in the dispersion of the additive throughout the polymeric product. The severe conditions of shear and temperature also may lead to degradation of the polymer itself, such as by reducing its molecular weight. Such changes generally result in a deterioration in polymer properties.

Additionally, adding additive powders to a polymeric melt via high shear mixing proves to be very difficult for continuous operation because it often is difficult to feed such powdered materials at a uniform rate.

U.S. Patent 3,000,854 describes a method for controlling the feed rate of an antioxidant to a continuously extruded polymer using an ultraviolet analyzer for feedback control. Unfortunately, this procedure is limited to antioxidants that can be detected using ultraviolet absorbents such as alkyl-substituted phenols. For proper analysis, the polymer must be melted and maintained as a melt through the analyzer. Furthermore, this technique suffers many of the same disadvantages outlined above with respect to the high shear mixing approach for dispersing such ingredients in a polymer system.

Another technique disclosed in the art, which avoids the necessity for high shear mixing, is described in U.S. Patent 3,455,752. According to this method, polyethylene in particulate, e.g. pellet form, is introduced at room temperature into a ribbon blender with a stirring or tumbling action, and antioxidants in minor amounts, such as 0.1 part to 10 parts per hundred parts of polyethylene pellets, are introduced at the start of the mixing cycle and are randomly scattered throughout the pellet mass. Then, molten dicumyl peroxide curative is added so that the surface of the polyethylene has powdered antioxidant adherent thereto and is coated with the peroxide.

Unfortunately, the dispersion achieved often is very arbitrary and generally non-uniform, with some pellets not receiving an antioxidant coating at all. Antioxidants may adhere to certain pellets preferentially

via a static charge which may build up non-uniformly on pellet surfaces due to collisions during mixing. Subsequent peroxide addition tends to coat the particles uniformly, and may tend to carry the antioxidant particles into the pellets. Nonetheless, due to the initial poor dispersion of the antioxidant, the resulting pellets retain the non-uniform dispersion of the antioxidant. As a further disadvantage, this process also tends to generate an excessive amount of dust due to surface abrasion of the polyethylene pellets.

Mixing additives, such as antioxidants or stabilizers, into a thermoplastic resin by melt extrusion also is known. This method tends to operate at a lower rate of shear but does not adequately distribute finely divided additives such as stabilizers uniformly in the resin. This method tends to be useful only for mixing large amounts of materials homogeneously.

Schmidt, U.S. Patent 4,101,512, describes a process for introducing an antioxidant into a cross-linkable polyethylene resin by using the cross-linking agent as a solvent for the antioxidant. The solution of antioxidant in the cross-linking agent is blended with granules or pellets of the cross-linkable polyethylene using a ribbon blender. Because the peroxide is added in liquid form, as a melt, it purportedly provides a lubricating function and thus avoids the generation of fines encountered during the operation of the prior '752 patent, while the liquid cross-linking agent or curative helps to disperse the antioxidant uniformly throughout the polyethylene pellets.

Great Britain Patent 1,133,505 describes a process for incorporating antioxidants into solid, porous particles of polyolefin wherein the antioxidant is dissolved in a solvent which is capable of being evaporated at a temperature below the softening point of the polyolefin and at a temperature at which the antioxidant is negligibly volatile. Also, the polyolefin must be substantially insoluble in the solvent. The solid, porous particles of polyolefin are immersed in the antioxidant solution for a time sufficient to permit or cause absorption of the antioxidant solution into the polyolefin. Thereafter, the solvent is removed by evaporation leaving behind the absorbed antioxidant in the porous particles of polyolefin.

Due to the need to evaporate significant quantities of solvent, this procedure is very energy intensive. Moreover, this procedure presents pollution control problems requiring significant expenditures of energy to satisfactorily condense and remove solvent vapors from the treatment process off-gas. This approach also imposes severe constraints on the process for preparing the resin pellets. Unless a uniform degree of porosity is obtained initially in the pellets, there is a large likelihood that the distribution of absorbed antioxidant will be non-uniform.

In still another prior art approach, described in Ruter, U.S. Patent 4,366,270, the polymeric additive is dissolved or dispersed in a polymerizable cyclic ester. The ester-additive mixture then is added to a thermoplastic resin during its melt extrusion, either before or after ester polymerization. Prior ester polymerization is suggested in those instances where the additive does not form a solution or stable dispersion in the cyclic ester. Otherwise, ester polymerization occurs in situ during the melt extrusion process.

Success of this approach depends, in large part, on the compatibility of the polymerized cyclic ester and the target polymer. Furthermore, processing conditions are limited by the need to obtain satisfactory ester polymerization, a requirement that may involve the addition of still other ingredients, such as an ester polymerization catalyst, into the thermoplastic resin. Resin compounders and formulators generally resist adding other ingredients that may inadvertently contribute to premature resin degradation, and thus are not likely to accept this approach.

Hyche U.S. Patent 4,898,616, discloses using an aqueous emulsion for applying additives, such as antioxidants, to polymeric particles. The emulsion is made by agitating an aqueous mixture of the additives, an emulsifiable wax, a base and a surfactant, at a temperature at which all the solids are molten. Polymeric particles then are contacted with the emulsion and after subsequent drying, polymer particles coated with the emulsion solids are recovered. Besides requiring a sizeable energy expenditure for drying the aqueous wax-based emulsion, this approach suffers from its dependence on ingredients not intended as polymer additives, such as the wax itself and particularly the combination of the base and surfactant, to form the stable wax emulsion.

Leung, et al U.S. Patent 4,857,593 describes a process for enhancing the fabrication of thermoplastic polymers wherein a mixture of a processing additive, which can be a silicone oil having a substituent containing at least one alkylene oxide unit and an alkoxy, hydroxy, carboxy, epoxy, or amino group, and a processing adjuvant is added to the thermoplastic polymer. No significance is attached to the manner by which these materials are combined. In the examples, all additives were combined with the resin prior to mixing with the high speed Henschel mixer.

In general, the present invention is directed to an improved approach for incorporating various additives, including stabilizers such as antioxidants, in thermoplastic polymeric materials, particularly polyolefin resins which exhibit instability or degradation upon exposure to light, atmospheric conditions and elevated

temperatures. The invention avoids many of the disadvantages of the prior art and is simple to carry out.

In accordance with the present invention, a stable suspension of an additive in a fluid is used to facilitate the dispersion of the additive, such as an antioxidant material, uniformly throughout a thermoplastic resin. Stable fluid suspensions can be dispersed uniformly in a wide variety of thermoplastic resins either by blending the fluid suspension with solid polymer particles or by blending the fluid suspension with molten resin, e.g., during melt extrusion. Such processes result in a uniform dispersion of the additive with the resin. Testing has shown that when a stable suspension of a solid antioxidant in a carrier fluid is used to stabilize a polyolefin resin against thermal degradation, by blending polyolefin resin particles with the stable suspension, the polymer's resistance to physical deterioration and color change are significantly improved in multipass extrusions, relative to those cases where the same solid antioxidant, alone, is mixed with the resin particles.

As stated, the present invention provides for uniformly dispersing in a thermoplastic resin all customary solid additives for thermoplastic synthetic resins, including UV stabilizers, thermostabilizers, primary and secondary antioxidants, crystallization accelerators, nucleating agents, catalyst deactivators, acid neutralizers and other like stabilizers.

As used herein, the term "stabilizer" is meant to include all materials which can be added to polymer compositions for the purpose of improving the polymer's retention of properties under various conditions of exposure and use. The better the dispersion of the stabilizer additive in the polymer, the better the stabilizer efficiency. All stabilizers contain polar moieties and often are particularly troublesome to disperse into relatively non-polar polymer resins, particularly polyolefin resins. For example, the use in polypropylene and polyamide of ETHANOX$^R$ 330, a relatively high molecular weight and high melting (244 °C) antioxidant theoretically offers high performance, but has been excluded from many applications because of the difficulty in obtaining uniform additive-resin dispersions. For similar reasons, relatively polar zinc oxide, a low-cost acid scavenger, also is not used routinely for stabilizing polyolefins because it is difficult to disperse uniformly. The present invention provides a solution to the problems confronting attempts to disperse polar additives into non-polar polymers.

Specific examples of stabilizers include fatty amine and fatty amide antistatic agents and catalyst deactivators such as sold by a division of Witco Chemical Co. under the KEMAMINE$^R$ and KEMAMIDE$^R$ labels, and ATMER$^R$ 163; stabilizers including organic phosphites, and other organic phosphorus compounds, such as tri-n-dodecylphosphite, the bis-substituted pentaerythritol diphosphites such as bis(2,4-di-t-butyl-phenyl) pentaerythritol diphosphite, available, for example, under the WESTON label, tris(mono- and di-nonylphenyl)phosphite and the Ciba-Geigy IRGAFOS$^R$ products including IRGAFOS$^R$ 168, phosphonites including fluorophosphonites such as Ethyl's ETHANOX$^R$ 398, and SANDOSTAB$^R$ P-EPQ; hindered phenols, such as octadecyl 3-(3' ,5'-di-t-butyl-4-hydroxyphenyl)-propionate, Shell's IONOL$^R$ (butylated hydroxy toluene), TOPANOL$^R$CA (ICI), IRGANOX$^R$ antioxidants marketed by Ciba-Geigy such as IRGANOX$^R$ 1076, 1093, 1098 and IRGANOX$^R$ 1010 (tetrakis[methylene-3(3' ,5'-di-tert-butyl-4'-hydroxy-phenyl)-propionate] methane), 3125 and 1425 and the ETHANOX$^R$ antioxidants marketed by Ethyl Corp. such as ETHANOX$^R$ 330 (1,3,5-trimethyl-2,4,6-tris(3,5-di-tert-butyl-4 hydroxybenzyl) benzene) and ETHANOX$^R$ 702, and Schenectady Chemical's ISONOX$^R$ 129 (2,2'-ethylidene-bis(4,6-di-t-butyl)phenol); the CYANOX$^R$ antioxidants marketed by American Cyanamid including CYANOX$^R$ 1790 and 2446; the GOOD-RITE$^R$ antioxidants marketed by B.F. Goodrich Co. including GOOD-RITE$^R$ 3114 and 3125; antioxidants/ metal deactivators, such as the NAUGARD$^R$ products marketed by Uniroyal Inc. such as NAUGARD$^R$ XLI and IRGANOX$^R$ 1024 marketed by Ciba-Giegy, thiodipropionate stabilizers such as dilauryl thiodipropionate and distearyl thiodipropionate; hindered amine compounds such as those containing tetra alkyl-piperidinyl functionality, and benzotriazols including the TINUVIN$^R$ light stabilizers and UV absorbers marketed by Ciba-Geigy such as TINUVIN$^R$ 144, TINUVIN$^R$ 326 and 327, TINUVIN$^R$ P, TINUVIN$^R$ 622LD, CHIMASSORB 944, American Cyanamid's CYANOX$^R$ 3346, GOOD-RITE 3034 and FAIRMOUNT MIXXIM 57, 62, 63, 67 and 68; benzophenone stabilizers, such as CYASORB$^R$ UV 2018 (American Cyanamid), UVINUL$^R$M 40 and UVINUL$^R$ 490 (Antara Chemicals); blends of organic phosphorus compounds and hindered phenol antioxidants marketed by Ciba-Geigy under the IRGANOX$^R$ label including IRGANOX$^R$ 1411, 1412, 501W, 712FF, B-225, B-220, B-215, 561, 900 and 921; nucleating agents such as benzilydene disorbitol and sodium benzoate; acid neutralizers including metal oxides such as zinc oxide; hydrotalcites; metal stearates; calcium lactate, magnesium aluminum hydroxy carbonates; stabilizers such as Mitsui DHT, Reheis L-55R, MILLAD$^R$ 3905 and 3940, and the like.

Other suitable stabilizers include: bis(2,4,6-tri-t-butyl-phenyl) pentaerythritol diphosphite, bis(stearyl)-pentaerythritol diphosphite, tris(2,4-di-t-butylphenyl) phosphite and 2,2'-ethylidenebis-(4,6-di-t-butylphenyl) fluorophosphite (ETHANOX$^R$ 398).

Further chemical identification of suitable stabilizers is as follows:

| | |
|---|---|
| CYANOX 1790 - | 1,3,5-tris(4'-t-butyl-5'-hydroxy-2',6'-dimethylbenzyl) isocyanurate |
| CYANOX 2246 - | 2,2'-methylenebis(4-methyl-6-t-butyl-phenol)-2,4,6-trimethyl benzene |
| ISONOX 129 - | 2,2'-ethylidenebis(4,6-di-t-butylphenol) |
| GOOD-RITE 3114 - | 1,3,5-tris(3',5'-di-t-butyl-4'-hydroxy-benzyl) isocyanurate |
| GOOD-RITE 3125 - <br> IRGANOX 3125 - | tris(3-(3',5'-di-t-butyl-4'-hydrobenzyl)-2"-acetoxy-stearyl) isocyanurate |
| IRGANOX 1076 | octadecyl-3-(3',5'-di-t-butyl-4-hydroxy-phenyl) propionate |
| IRGANOX 1425 - | calcium bis(ethyl-(3,5-di-butyl-4-hydroxy-benzyl) phosphonate |
| IRGANOX 1024 - | N,N'-bis(beta-3,5-di-t-butyl-4-hydroxy-phenylpropiono) hydrazide |
| IRGANOX 1093 - | distearyl-3,5-di-t-butyl-4-hydroxybenzyl phosphonate |
| IRGANOX 1098 - | N,N'-hexamethylene-bis-(3,5-di-t-butyl-4-hydroxyhydro) cinnamamide |
| IRGAFOS 168 - | tris(2,4-di-t-butylphenyl) phosphite |
| SANDOSTAB-P-EPQ - | tetra(2",4"-di-t-butylphenyl) diphenyl-4,4'-ene diphosphonite |

Exemplary of materials suitable for use as the liquid phase of the suspensions of the present invention are normally liquid silicones; normally liquid, thermoplastic resin stabilizers; normally liquid, hydroxylated polyoxyalkylenes and alkoxy end-blocked products thereof; and normally liquid, poly(alpha-olefins) and hydrogenated products thereof.

As used herein, suspension is a generic term encompassing suspensions and dispersions.

Silicones, which are used as the continuous phase in the stable suspensions of the present invention are synthetic polymers which can be represented generically by the formula

$$(R_3SiO_{1/2})_2\ (R_2SiO)_x$$

where the R's can be the same or different and can be any of a wide variety of monovalent organic radicals, and x is an integer equal to or greater than 1. Silicones, which also are commonly referred to as polyorganosiloxanes, are known to possess excellent thermal, oxidative and hydrolytic stability, have low surface tension, are odorless and retard additive agglomeration. These properties make them particularly suitable for use as a carrier fluid for blending additives with thermoplastic resins.

The present invention specifically pertains to the use of a subclass of synthetic silicone polymers which are fluid under the conditions used for mixing solid additives with thermoplastic resins and particularly for extruding thermoplastic resins. Such silicones typically exhibit a molecular weight ranging from about 200 to about 150,000. Suitable silicone fluids may be linear, branched or cyclic.

Silicone fluids that have been chemically modified to introduce a suspension stability enhancing polar group such as hydroxy, hydroxyalkyl, carboxyl, amino, amide, carbamate, aldehyde, nitrile, phenol, vicinal epoxy, alkoxy, phosphite, phosphine, phosphonate, carboxylic acid ester, polyether, e.g., polyalkylene

oxide, thiol, sulfide and/or another polar moiety on the polysiloxane are particularly useful in the present invention. Such silicone fluids generally serve the dual roles of forming a stable suspension with solid additive(s), which enhances the dispersion of the additive(s) with the thermoplastic resin and act as a thermoplastic adjuvant in their own right. In accordance with the broadest aspects of the present invention, the suspension stability enhancing polar group or moiety can be positioned either along the polymeric silicone backbone or as part of a substituent pendant to the silicone backbone. U.S. 4,778,838, the disclosure of which is incorporated herein by reference, illustrates a known silicone polymer having such moieties in both positions. Preferably, the moieties are positioned in a pendant position.

A preferred class of silicone fluids having only pendant moieties can be represented by the formula [1]:

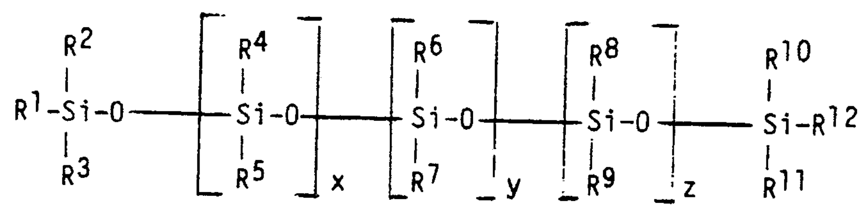

[1]

where the substituents $R^1$ through $R^{12}$ can be the same or different and are selected from alkyl groups, preferably those having from 1 to 18 carbon atoms, aryl groups such as phenyl, and alkylphenyls, and other monovalent organic radicals containing a moiety selected from hydroxy, hydroxyalkyl, carboxyl, amino, amide, carbamate, aldehyde, nitrile, phenol, vicinal epoxy, alkoxy, phosphite, phosphine, phosphonate, carboxylic acid ester, polyether, e.g., polyalkylene oxide, thiol, and sulfide, and where x, y and z can be the same or different and the sum of x, y and z is between 1 and 3000. As is known, the substituents on a single silicon atom need not all be the same. Thus, they can all be methyl groups or they can be a combination of two or more alkyl groups or other groups as defined above.

It is to be understood that the linear silicons may contain small amounts of branched silicones having minor amounts of tri and tetra functional siloxane units.

The simplest silicone fluids, chemically speaking, according to preferred formula [1] for use in the present invention are the polydimethylsiloxanes. In the polydimethylsiloxanes, the substituents $R^1$ through $R^{12}$ in formula [1] are all methyl groups. Such materials generally are represented by the formula $MD_nM$ where M represents terminal trimethylsiloxy groups, and D constitutes repeating dimethylsiloxane units, and $n = x + y + z$. Such silicone fluids can be prepared by polymerizing a cyclic siloxane or a mixture thereof such as hexamethylcyclotrisiloxane, octamethylcyclotetrasiloxane, or decamethylcyclopentasiloxane in the presence of an acid catalyst and an end-capper such as hexamethyldisiloxane.

As is well known to those skilled in the silicone chemistry art, a shorthand nomenclature has been developed using the letters M, D, T and Q to represent monofunctional, difunctional, trifunctional and quadrifunctional siloxane monomer units. The letter symbols are given a prime or an asterisk, e.g., D' or D*, to indicate substituents other than methyl. For example, the silicone $(CH_3)_3SiO\text{-}[(CH_3)_2\text{-}SiO]_{10}\text{-}[CH_3\text{-}(C_3H_6OH)SiO]_{10}\text{-}Si(CH_3)_3$ is represented as $MD_{10}D'_{10}M$ or $MD_{10}D^*_{10}M$ in this nomenclature.

Preferred silicone fluids can be represented by formula [1] above with at least one of $R^6$ through $R^9$ being a monovalent organic radical containing one of the above-mentioned polar moieties. Generally, the substituents $R^1$ through $R^6$ and $R^9$ through $R^{12}$ constitute alkyl or aryl moieties, most typically all being methyl, and the substituents $R^7$ and $R^8$ contain one or more of the above-mentioned suspension stability enhancing polar moieties. In this preferred embodiment, x has a value between 0 and 2000, preferably between 5 and 750; y has a value between 1 and 500, preferably between 5 and 250 and z has a value between 0 and 500. Such polydiorganosiloxanes, and particularly the polydialkylsiloxanes, are well known in the art and need not be described in detail.

For example, dimethylsilicones, suitable for use as carrier fluids, can be provided with sterically hindered amine moieties for light stabilization of thermoplastic resins as described in U.S. Patent 4,895,885, the disclosure of which is hereby incorporated by reference; with sterically hindered phenolic moieties for resin storage stabilization as described in U.S. Patent 4,879,378 the disclosure of which is incorporated herein by reference; with phosphite moieties for effecting peroxide decomposition; with such polar groups as hydroxyalkyl for causing deactivation of residual catalysts; with hindered amine light stabilizers; or with polyethylene oxide, vicinal epoxy or amino moieties for improving thermoplastic resin processing (so-called processing aids as are described in Foster U.S. Patent 4,535,113, the disclosure of which is incorporated herein by reference). Further, more than one functional group can be bonded to the same polysiloxane

backbone or mixtures of such functionalized polysiloxanes can be employed to obtain multiple effects in the resin.

Polysiloxanes having various substituents in pendant positions along their backbone are well known in the art. Such materials can be prepared by the catalytic addition of aliphatically unsaturated compounds having the desired substituent to hydrosiloxanes at a molar ratio sufficient to consume the hydrosiloxane moieties or by dehydrocondensation of alcohols with hydrosiloxanes. Usually a platinum catalyst such as chloroplatinic acid is used. As will be recognized by those skilled in the art, hydrosiloxanes can be prepared by reacting a mixture containing octamethylcyclotetrasiloxane, 1,2,3,4-tetramethylcyclotetrasiloxane, a chain terminator such as hexamethyldisiloxane, and an acid catalyst. Instead of tetramethylcyclotetrasiloxane, a tri-methyl end-blocked methylhydrogenpolysiloxane can be used. By varying the mole ratio of the various reactants, the molecular weight and number of various repeating units can be varied. A silicone fluid having a molecular weight of at least about 1000 is preferred. Also a silicone fluid should be selected having a solubility parameter that matches favorably the solubility parameters of the additive(s); see Charles M. Hansen, Journal of Paint Technology, 39 (505); 104-117 (1967), the disclosure of which is incorporated herein by reference. This latter requirement can be met by proper chemical modification of the silicone fluid to introduce suspension stability enhancing polar groups having differing degrees of polarity, such as hydroxy, hydroxy alkyl, carboxy, amine, amide, carbamate, aldehyde, nitrile, phenol, vicinal epoxy, alkoxy, phosphite, phosphine, phosphonate, carboxylic acid ester, polyether, e.g., polyalkylene oxide, thiol, and sulfide.

Surprisingly, such chemical modification of the siloxane polymer backbone so affects the interaction between the silicone fluid and the additive, as to permit, in most cases, the preparation of stable suspensions of the additive as a dispersed phase, in the silicone fluid as the continuous phase.

Among liquid stabilizers suitable as the continuous phase of the suspensions of the present invention are the liquid phosphites exemplified by the tris(mono- and di-nonylphenyl)phosphites marketed under the trademark WESTON by General Electric Company such as tris(nonylphenyl)phosphite; liquid phosphites such as tris(phenylethylphosphite) and the like.

Among suitable hydroxylated polyoxyalkylenes suitable as the continuous phase of the suspensions of the present invention can be noted: hydroxyl terminated polyoxyalkylenes such as the poly(oxyethylene) glycols, also referred to as polyethylene glycols, marketed under the trademark CARBOWAX by Union Carbide Chemicals and Plastics Company Inc., having the generalized formula:

$$HO\text{-}(CH_2CH_2O)_a\text{-}H;$$

and alkoxy end-blocked products thereof wherein each alkyl group has 1 to 6 carbon atoms inclusive and a represents the number of oxyethylene groups; polyols marketed under the trademark PLURONIC by BASF Wyandotte which are block copolymers having ethylene oxide and propylene oxide units, and alkoxy end-blocked products thereof wherein each alkyl group has 1 to 6 carbon atoms inclusive; monohydroxylated polyoxyalkylenes, which can be random or block polymers, marketed by Union Carbide Chemicals and Plastics Company Inc. under the trademark UCON, having the generalized formula:

$$R_4O\left[CH_2\overset{\overset{\displaystyle CH_3}{|}}{C}H\text{-}O\right]_b\left[CH_2\text{-}CH_2O\right]_c\text{-}H;$$

wherein $R_4$ = H or alkyl of 1 to 6 carbon atoms inclusive and alkoxy (1-6 carbons) end-blocked products thereof; wherein b has a value of at least one and c may be zero or at least one; poly(oxyalkylene) polyols such as glycerol initiated poly(oxypropylene) triols and poly(oxypropylene) glycols, both marketed by Union Carbide Chemicals and Plastics Company Inc. under the trademark NIAX.

Alkyl end-blocked products can be produced conveniently, as is well known in the art, by reaction with an alkyl halide.

Liquid poly(alpha-olefins) are generally produced by polymerizing one or more alpha olefins such as propylene, butene, 4-methyl pentene, hexene, octene, decene and the like. For purposes of this invention, hydrogenated products of poly(alpha-olefins) are also suitable.

Suitable poly(alpha-olefins) are marketed under the trademark HITEC by Ethyl Corporation.

The present invention can be used for dispersing additives in all conventional thermoplastic synthetic resins, such as polyolefins, polystyrene, polyvinyl chloride, polyamides, polyesters, polycarbonates, polyacrylates, and polyethers to name a few. Poly-olefins which can especially benefit from the present invention include homopolymers of olefins as well as interpolymers of one or more olefins with each other and/or up to about 30 percent by weight of one or more monomers which are copolymerizable with such olefins. Homopolymers and interpolymers including high pressure, low density polymers, of such olefins as ethylene, propylene, butene, isobutylene, hexene, 4-methyl-pentene, pentene, octene, nonene, decene as well as interpolymers of one or more of such olefins and one or more of other monomers which are interpolymerizable with such olefins, such as vinyl and diene compounds, illustrated by ethylene copolymers containing ethylidene norbornene.

Also included in the term olefin polymers are blends of one polymer with one or more other polymers. Illustrative of such blends are ethylene/olefinic polymers with one or more of the following: polypropylene, high pressure, low-density polyethylene, high density polyethylene, polybutene-1, copolymers such as ethylene/acrylic acid copolymers, ethylene/methyl acrylate copolymers, ethylene/ethyl acrylate copolymers, ethylene/vinyl acetate copolymers, ethylene/acrylic acid/ethyl acrylate terpolymers, ethylene/acrylic acid/vinyl acetate terpolymers, also propylene copolymers with ethyl-propylene elastomers and the like.

As used throughout this specification, which includes the claims, "stable suspensions" are those wherein there is less than about 5 percent by weight separation of the liquid phase, evidenced by the formation of a two-phase system, after centrifugation of the suspensions under a force of one-hundred times the force of gravity (100G) for one hour. Particularly desirable are those suspensions which exhibit less than about 5 percent by weight separation after centrifugation under a force of 1400G for 4 hours. Suspensions which exhibit less than about 5 percent by volume separation after centrifugation under a force of 1400G for 4 hours are considered as stable, under ambient conditions, for at least about 6 months. The gravimetric stability of the suspensions of this invention is manifested, for example, by long term stability and uniform consistency during metering operations.

Additives which are used to formulate the suspensions of this invention generally have the following particle size (diameter): at least about 95 percent by weight having a particle size less than about 150 microns and at least about 20 percent by weight having a particle size less than about 30 microns, preferably at least about 95 percent by weight having a particle size less than about 150 microns and at least about 20 percent by weight having a particle size less than about 20 microns, more preferably, at least about 95 percent by weight having a particle size less than about 100 microns and at least about 35 percent by weight having a particle size less than about 10 microns. Suspension stability is improved if the weight average particle size is less than about 20 microns, preferably less than about 10 microns.

It will, of course, be recognized by one skilled in the art that the specific gravity, or particle density of each stabilizer particle will vary according to its composition. For example, the specific gravity of zinc oxide is about 5.7 g/cm$^3$, while the specific gravity of IRGANOX 1010 is 1.15 g/cm$^3$. Therefore, the weight fractions of stabilizers in suspensions, as reported here, may differ appreciably from their volume fractions. At equal weight fractions, denser stabilizers will have lower volume fractions of solids in suspensions, and therefore may give suspensions with lower viscosities, other factors being equal. However, with liquid phases having specific gravity of about 1, denser stabilizers will tend to settle out of the suspension more readily than stabilizers whose densities more closely approximate that of the liquid phase, thus reducing the stability of the suspension. These factors should be considered in selecting compositions from which to prepare stable suspensions according to this invention.

Particle size in microns, as reported herein, was determined using a MICROTRAC$^R$ particle size analyzer.

Particularly desirable for purposes of this invention are additives, having the particle size described, which actually are mixtures of particles, that is having a bimodal size distribution. Varying the relative amounts of the larger and smaller sized particle distributions in a particular suspension permits some control of suspension viscosity, with lower suspension viscosities accompanying an increase in the fraction of larger sized particles in a particular suspension.

It is known that the viscosity of a suspension can increase drastically when the concentration of the suspended solid increases. Generally, at high concentrations of particles, the "finer" the particles, the higher the viscosity of the suspension. It is also known that the maximum volume fraction of particulate solid that can be packed into a dispersion, while maintaining the liquid property of the dispersion, is the "maximum packing", which is a function of particle shape and size distribution. When the concentration of particles increases and ultimately particles touch each other, there is a point at which no more particles can be accommodated in a fixed volume. The minimum volume per unit weight of the particles is the closely

packing volume. A fraction of the total volume is occupied by the solid particles and the rest of the fraction is occupied by void or liquid volume. For example, when spherical monodisperse particles reach a 74% (by volume) level the particles are close packed and no more particles can be added, unless smaller particles are also incorporated which can fit into the interstitial volume between the larger spheres. This advantage of void filling by smaller particles can be realized even if the particle volume concentration is less than close packing as long as the void space cannot incorporate more large particles without causing interference.

Another property to be considered with respect to suspensions (dispersions) is stability against sedimentation. Dispersions containing large particles are usually not gravimetrically stable. Small particles, which have high surface area, enhance structure forming in a matching liquid medium and thus enhance the stability of the dispersion. Mixing particle distributions with optimal size ratio, on the other hand, reduces the viscosity of the dispersion. The larger particles in the mixture can then be stabilized against settling by the fine particle network. Optimal ratio of particle distributions, the presence of fine particles, and the correct selection of the liquid medium are all important.

Unexpectedly, it has now been found that utilizing a mixture of two populations of particles having different average particle sizes, such that the ratio of the average diameter of the particles in the larger particle size population to the average diameter of the particles in the smaller particle size population is at least about two, preferably from about 2 to about 100 and the weight of particles from the larger particle size population is from about 30 percent to about 90 percent of the weight of all of the particles, the resultant suspensions are not only "concentrated" and have significantly lower viscosity as compared to a suspension having only fine particles, but are also stable even though large particles are present. Preferred are bimodal particle size distributions wherein the larger-sized distribution has a weight average particle size at least 5 times the weight average particle size of the smaller-sized distribution.

The suspensions of this invention are prepared by simply admixing the solid phase with the liquid phase using a high shear mixer such as a COWLES$^R$ mixer. It is to be understood that mixtures of solids and/or mixtures of liquids can be used, in formulating the suspensions.

The concentration of the dispersions, that is, the amount of solid in the liquid phase, is usually on the order of about 0.1 to about 80 percent by weight, generally about one to about 60 percent by weight, preferably about 10 to about 70 percent by weight, more preferably about 10 to about 50 percent by weight and even more preferably about 30 to about 60 percent by weight. The higher the concentration, the less liquid is carried into the resin formulation.

While not wishing to be bound by any specific theory, it is believed that the stable suspensions of this invention are due to the occurrence of controlled agglomeration. In the case of suspensions with a solids content above a certain concentration, usually above about 20 percent by weight, controlled agglomeration is believed to result in a structure which extends through the whole liquid volume and supports the individual particles, preventing the particles from settling. Particles of different properties, such as polarity, interact with each other with different degrees. A selected liquid with preferred polarity can alter the degree of interaction between particles. Consequently, there is no need to incorporate extraneous ingredients in the suspensions, such as dispersants, surfactants and the like, whose sole purpose is to ensure dispersibility of the particles and the stability of the suspensions. The present invention provides stable suspensions with favorable viscosity for subsequently admixing with thermoplastic resins wherein all of the suspension ingredients have a function to serve in the resin.

The suspension, containing the desired additive in suspended form, is added directly to a synthetic resin, which can be in either the form of solid particles (in pellet, granule, powder, etc., form) or in the molten state. In other words, the stable suspensions of the present invention can be pre-blended with polymer particles before polymer processing operations such as melt extrusion, injection molding and the like or the suspension can be added directly to a molten polymer during its processing. The compounding of the suspension and thermoplastic resin may be done by spraying or by mixing or tumbling the resin and suspension in a ribbon blender, utilizing a two-roll mill, an extruder, including single screw and multiple screw extruders, a Banbury or Brabender mixer. Suitable procedures and equipment will readily occur to those skilled in the art of polymer processing. Concentrates or master batches of the suspension and resin may be produced and blended with virgin resin such as on a mill before final processing. The rolls on a two-roll mill may operate at different speeds and temperatures. In spite of the simplicity of the milling operation, extrusion is usually preferred for blending the suspension and resin since an extruder can operate continuously, for example to produce strands that may be cut by a rotating knife to produce pellets.

The stable suspension can be added to the synthetic resin at the end of the resin manufacturing process, such as directly after resin polymerization or polycondensation, for example while it is still molten or to powdered or pelleted polymer particles, or to the polymer as a slurry in the reaction medium. However, it also is possible, and often more convenient, to admix the suspension with the synthetic resin

subsequently during one of its myriad processing stages, for example prior to or during extrusion. Using a fluid suspension not only facilitates the mixing/dispersing of the additive with the polymer, but also makes it easier to control the amount of additive mixed with the resin polymer. The suspension can be mixed with polymer by high shear mixing, tumbling in a drum or directly metering through an extruder port.

In any event, a homogeneous distribution of the additive with the polymer is achieved without the danger of thermally degrading the polymer or additive and without agglomerating the additive.

The advantage of having uniformly dispersed solid, for example, stabilizer is reflected in the aging characteristics of the finished product. When the additives are adequately dispersed, there are no localized areas starved of stabilizer which can fail due to polymer degradation, long before the bulk of the material degrades, as the stabilizer is gradually depleted during service life.

The amount of suspension added to a thermoplastic resin will vary and depend, in part, upon the concentration of the suspension, the actual thermoplastic resin and the effect desired. In the case of a suspension-containing stabilizer, a sufficient amount is added to stabilize the resin. Usually, it is sufficient to provide about 0.01 to about 2 percent by weight, preferably about 0.02 to about 1 percent by weight solid stabilizer, based on the weight of the resin.

In the following examples, which are intended to illustrate the present invention and not limit the scope thereof in any manner, components of the suspensions/dispersions of each example and of each control, and procedures used to prepare and test the suspensions/dispersions and thermoplastic polymer compositions based thereon are described.

Example 1

ETHANOX[R] 330 - (1,3,5-trimethyl)-2,4,6-tris(3,5-di-tert-butyl-4-hydroxybenzyl)benzene

Micronized ETHANOX 330 - a compound as described wherein about 50 percent by weight of the particles had a particle size less than about 3.9 microns, and about 90 percent by weight had a particle size less than about 13.8 microns.

ETHANOX products are marketed by Ethyl Corporation.

CARBOWAX[R] 400 - a liquid poly(oxyethylene)glycol having a number average molecular weight of about 400.

CARBOWAX products are marketed by Union Carbide Chemicals and Plastics Company Inc.

Example 2

Micronized ETHANOX 330 - described in Example 1

WESTON[R] 399 - tris(nonylphenyl)phosphite

WESTON products are stabilizers marketed by General Electric Company.

Example 3

IRGANOX[R] 1010 - (tetrakis[methylene-3(3',5'-di-tert-butyl-4'-hydroxyphenyl)propionate] methane

Micronized IRGANOX 1010 - a compound as defined wherein about 50 percent by weight of the particles had a particle size of less than about 3.2 microns and about 99 percent by weight had a particle size less than about 14.2 microns

IRGANOX products are antioxidants marketed by Ciba-Geigy Corporation

WESTON 399 - described in Example 2

Example 4

Micronized IRGANOX 1010 - described in Example 3

Non-micronized IRGANOX 1010 - described in Example 3 with the exception that about 50 percent by weight of the particles had a particle size less than about 53.6 microns and about 90 percent by weight had a particle size less than about 109.2 microns

WESTON 399 - described in Example 2

Example 5

Micronized ETHANOX 330 - described in Example 1

UCON[R] LB285 - a liquid linear polymer of propylene oxide having the generalized formula:

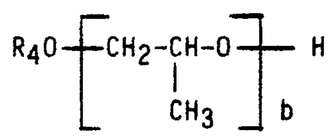

UCON LB285 is a butanol initiated product having a viscosity of 285, at 100°F, expressed as Saybolt Universal seconds. Utilizing this product is especially advantageous as stable dispersions of high concentrations can be formulated, as compared to other liquid carriers of comparable viscosity.

UCON products are marketed by Union Carbide Chemicals and Plastics Company Inc.

Example 6

Micronized ETHANOX 330 - described in Example 1

HITEC[R] 180 - hydrogenated polymer of decene-1 and octene-1

HITEC products are marketed by the Ethyl Chemicals Group of Ethyl Corporation

Example 7

| | |
|---|---|
| Micronized ETHANOX 330 - | described in Example 1 |
| NIAX[R] LG56 - | glycerol initiated poly(oxypropylene)triol having a hydroxyl number of 56 |

NIAX products are hydroxy polyoxyalkylenes marketed by Union Carbide Chemicals and Plastics Company Inc.

Control 1

| | |
|---|---|
| Micronized ETHANOX 330 - | described in Example 1 |
| Non-micronized ETHANOX 330 - | described in Example 1 with the exception that about 50 percent by weight of the particles had a particle size less than about 75.5 microns, and about 90 percent by weight had a particle size less than about 138.7 microns |
| Glycerol | |

Relative oxidative stability of a resin containing an antioxidant was determined at a temperature of 180° C under an oxygen feed of 50 ml per minute according to the test, Average Oxidation Induction Time (OIT), reported in minutes and described in chapter 9 of the following publication:
H.E. Bair
Thermal Analysis of Additives in Polymer
Thermal Characterization of Polymeric Materials
E.A. Turi Ed.
Academic Press, 1981
New York

Stability of each dispersion (suspension) was determined by centrifuging for the period of time and under the force indicated, the force of gravity being designated as G, and visually inspecting the dispersions. The stability of Control 1 was determined by measuring the height of the liquid after centrifugation, and knowing the cross-sectional area of the cylindrical vessel, translating the height to a volume measurement.

Viscosity values were determined, using a BOHLIN[R] VOR rheometer, at a temperature of 25° C at the shear rate reported.

Yellowness Index - determined according to ASTM test D-1925-70. This test is designed to determine the degree of yellowness or the change of the degree of yellowness of the polymer tested. A lower numerical value indicates "less yellowness".

Example 1

Eighty grams of micronized ETHANOX 330 and 120 grams of CARBOWAX 400 were admixed, for 5 minutes, in a COWLES[R] mixer which was operating at 1500 revolutions per minute.

The resultant dispersion was then removed from the COWLES mixer and tested as to viscosity and stability.

Viscosity - 7860 centipoise at a shear rate of 92.3 reciprocal seconds
Stability - the dispersion was still stable after 4 hours of centrifugation under a force of 1400G

Example 2

Fifty grams of micronized ETHANOX 330 and 100 grams of WESTON 399 were admixed, for 5 minutes, in a COWLES mixer which was operating at 1500 revolutions per minute.

The resultant dispersion was then removed from the COWLES mixer and tested as to viscosity and stability.

Viscosity - 30,000 centipoise at a shear rate of 92.3 reciprocal seconds

Stability - the dispersion was still stable after 4 hours of centrifugation under a force of 1400G

Example 3

Fifty grams of micronized IRGANOX 1010 and 100 grams of WESTON 399 were admixed, for 5 minutes, in a COWLES mixer which was operating at 1500 revolutions per minute.

The resultant dispersion was then removed from the COWLES mixer and tested as to viscosity and stability.

Viscosity - 38,000 centipoise at a shear rate of 92.3 reciprocal seconds

Stability - the dispersion was still stable after 4 hours of centrifugation under a force of 1400G

Example 4

Twenty-five grams of micronized IRGANOX 1010, 25 grams of non-micronized IRGANOX 1010 and 100 grams of WESTON 399 were admixed, for 5 minutes, in a COWLES mixer which was operating at 1500 revolutions per minute.

The resultant dispersion was then removed from the COWLES mixer and tested as to viscosity and stability.

Viscosity - 32,000 centipoise at a shear rate of 92.3 reciprocal seconds

Stability - the dispersion was still stable after 4 hours of centrifugation under a force of 1400G

The weight fraction of particles from the larger particle size population was 50 percent and the ratio of the average diameter of the particles in the larger particle size population to the average diameter of the particles in the smaller particle size population was 14.7.

Comparison with Example 3 shows that by using a mixture of particles, as in Example 4, a dispersion of lower viscosity is obtained.

Example 5

Eighty grams of micronized ETHANOX 330 and 80 grams of UCON LB285 were admixed, for 5 minutes, in a COWLES mixer which was operating at 1500 revolutions per minute.

The resultant dispersion was then removed from the COWLES mixer and tested as to viscosity and stability.

Viscosity - 4200 centipoise at a shear rate of 92.3 reciprocal seconds
6200 centipoise at a shear rate of 5.83 reciprocal seconds

Stability - the dispersion was still stable after 4 hours of centrifugation under a force of 1400G

The data of this example establish that by using UCON LB285, a stable suspension of relatively low viscosity and high concentration of solids is obtained.

Example 6

Fifty grams of micronized ETHANOX 330 and 150 grams of HITEC 180 were admixed, for 5 minutes, in a COWLES mixer which was operating at 1500 revolutions per minute.

The resultant dispersion was then removed from the COWLES mixer and tested as to stability.

Stability - the dispersion was still stable after 4 hours of centrifugation under a force of 1400G

Example 7

Seventy grams of micronized ETHANOX 330 and 210 grams of NIAX LG-56 were admixed, for 5 minutes, in a COWLES mixer which was operating at 1500 revolutions per minute.

The resultant dispersion was then removed from the COWLES mixer and tested as to stability.

Stability - the dispersion was still stable after 4 hours of centrifugation under a force of 1400G

Control 1

Twenty-five grams of micronized ETHANOX 330, 25 grams of non-micronized ETHANOX 330 and 150 grams of glycerol were admixed, for 5 minutes, in a COWLES mixer which was operating at 1500 revolutions per minute.

The resultant dispersion was then removed from the COWLES mixer and tested as to viscosity and stability.

Viscosity - 5500 centipoise at a shear rate of 92.3 reciprocal seconds
13,000 centipoise at a shear rate of 5.83 reciprocal seconds

Stability - Sample A (aliquot part)
after 1 hour of centriguation under a force of 1400G, about 10 percent by volume glycerol separated out. This sample was then centrifuged for an additional 3 hours under a force of 1400G. About 40 percent by volume glycerol separated out.
Sample B (aliquot part)
after 4 hours of centriguation under a force of 700G, about 15 percent by volume glycerol separated out

A dispersion, identical to that of Control 1 was prepared with the exception that the liquid carrier, glycerol, was replaced by Silicone A, as described in detail in Example 28 of this specification.

The dispersion of Example 28, which illustrates the present invention, had significantly lower viscosity and significantly improved stability as compared to the dispersion of Control 1.

Compositions, the formulations of which are described in Table I were compounded in a HENSCHEL[R] mixer and formed into tapes 20 mils thick by extrusion, at a temperature of 200°C, through a slit die fitted to a BRABENDER[R] extruder, followed by compaction through a roller.

The resultant tapes were then tested as set forth in Table I.

Table I

| Formulations, in grams | Example 8* | Example 9** | Control 2 | Control 3 | Control 4 |
|---|---|---|---|---|---|
| Copolymer of ethylene/ 1-butene having a melt index of 1 | 1365 | 1365 | 1365 | 1365 | 1365 |
| Micronized ETHANOX 330 described in Example 1 | 0.41 | 0.41 | 0.41 | - | - |
| CARBOWAX 400 | 0.59 | - | - | 0.6 | - |
| UCON LB285 | - | 0.41 | - | - | - |
| - - - - - - | | | | | |
| Yellowness Index | -1.655 | -4.505 | -0.375 | -3.860 | -3.520 |
| OIT | 43.2 | - | 32.8 | 0 | 0 |

* - ETHANOX 330 and CARBOWAX 400 were added as a one gram dispersion, prepared as described in Example 1

** - ETHANOX 330 and UCON LB285 were added as a 0.82 gram dispersion, prepared as described in Example 5

The properties reported in Table I clearly establish that the claimed compositions, as illustrated by the composition of Example 8 have better oxidative stability as compared to Controls 2-4; and Example 9 has a

lower yellowness index as compared to Controls 2-4.

Compositions, the formulations of which are set forth in Table II were prepared, formed into tapes and tested to determine Average Oxidation Induction Time, as described with respect to the compositions of Table I.

Table II

| Formulations, in grams | Example 10* | Control 5 | Control 6 | Control 7 |
|---|---|---|---|---|
| Copolymer of ethylene/ butene-1 having a melt index of 1 | 1365 | 1365 | 1365 | 1365 |
| Micronized IRGANOX 1010 described in Example 3 | 0.41 | 0.41 | - | - |
| WESTON 399 (described in Example 2) | 0.82 | - | 0.82 | - |
| - - - - - - | | | | |
| OIT | 33.3 | 27.4 | 0 | 0 |

* IRGANOX and WESTON were added as a 1.23 gram dispersion prepared as described in Example 3.

The claimed compositions, illustrated by Example 10, have better oxidative stability as compared to the oxidative stability of Controls 5-7.

Silicone fluids or liquids were utilized in formulating the suspensions and/or polymeric compositions of Examples 11-28.

Silicone A is an organo modified polydimethylsiloxane fluid having a molecular weight of about 8000 and a viscosity of about 1200 centipoise. Silicone A is a processing aid marketed as UCARSIL$^R$ PA-1 by Union Carbide Chemicals and Plastics Company Inc.

Melt Index and Melt Flow Ratio represent the melt viscosity of the polyolefin at a prescribed temperature under various pressure in accordance with ASTM D-1238. Data were collected with the aid of a Tinius-Olsen Plastograph$^R$.

Example 11

70 g of micronized ETHANOX 330 (90% by weight of particles less than 19 microns and 50% by weight of particles less than 8.2 microns) and 210 g of Silicone A, were blended in a COWLES mixer at 1500 RPM for 5 minutes. The resulting suspension was found to have a density of about 1 g/ml and a viscosity of about 4000 cP at a shear rate of 92 reciprocal seconds at 25° C. The suspension was sufficiently stable to withstand 4 hours of centrifugation at a force of 1400 G. It was discovered that the melting point of ETHANOX 330, normally about 244° C, was lowered as a function of the ratio of Silicone A to ETHANOX 330. At the 3:1 weight ratio of this example, the melting point was about 192° C.

Example 12

70 g of ZnO (Kadox 911) having a weight average particle size of below 1 micron and 210 g of Silicone A were blended in a COWLES mixer at 1500 RPM for 5 minutes. The resulting suspension was found to be sufficiently stable to withstand centrifugation under a force of 1400 G for 4 hours.

Example 13

70 g of the micronized ETHANOX 330 of Example 11 and 210 g of hydroxypropyl silicone liquid ($CH_3$)-

$_3SiO-[(CH_3)_2SiO]_{10}-[CH_3(C_3H_6OH)SiO]_{10}-Si(CH_3)_3$ were blended in a COWLES mixer at 1500 RPM for 5 minutes. The resulting suspension remained stable after centrifugation for 4 hours under a force of 1400 G.

Example 14

60 g of Reheis L-55R, a grade of aluminum-magnesium hydroxy carbonate, having a particle size distribution such that 90% by weight of particles were less than 6.2 microns and 180 g of Silicone A were blended in a COWLES mixer at 1500 RPM for five minutes. The resulting suspension was sufficiently stable to withstand four hours of centrifugation under a force of 1400 G.

Example 15

40 g of the micronized ETHANOX 330 of Example 11 were blended with 120 g of a silicone fluid having hindered amine moieties of the formula $MD_5D^*_{15}M$ where D* is

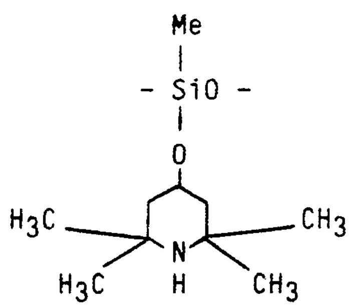

The blending was done in a COWLES mixer at 1500 RPM for five minutes. The resulting suspension was sufficiently stable to withstand four hours of centrifugation under a force of 1400 G.

Example 16

40 g of the micronized ETHANOX 330 of Example 11 were blended with 120 g of a silicone fluid having glycidoxy propyl moieties of the formula $MD_{10}D^*_{10}M$ where D* is

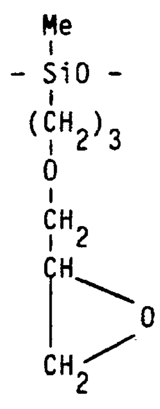

The blending was done in a COWLES mixer at 1500 RPM for five minutes. The resulting suspension was sufficiently stable to withstand four hours of centrifugation under a force of 1400 G.

Example 17

40 g of the micronized ETHANOX 330 of Example 11 were blended with 120 g of a silicone fluid having polyethylene oxide moieties of the formula $MD_{400}D^*_{75}M$ where D* is

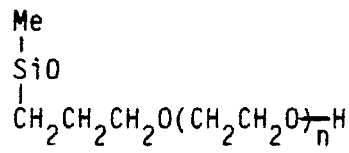

and n is 6.6, made by reacting an allylpolyethylene glycol having a weight average molecular weight of 350 with a hydrosiloxane. The blending was done in a COWLES mixer at 1500 RPM for five minutes. The resulting suspension was sufficiently stable to withstand four hours of centrifugation under a force of 1400 G.

Example 18

10 g of micronized IRGANOX 1010 having essentially all particles smaller than about 14 microns, 20 g of ZnO (Kadox 911) described in Example 12, 20 g of micronized IRGAFOS 168 having essentially all particles smaller than 1 micron and 150 g of Silicone A were blended in a COWLES mixer at 1500 RPM for five minutes. The resulting suspension was found to be sufficiently stable to withstand centrifugation under a force of 1400 G for 4 hours.

Example 19

10 g of the micronized ETHANOX 330 of Example 11, 20 g of ZnO (Kadox 911) described in Example 12, 20 g of micronized IRGAFOS 168 having essentially all particles smaller than 1 micron and 150 g of Silicone A were blended in a COWLES mixer at 1500 RPM for 5 minutes. The resulting suspension was found to be sufficiently stable to withstand centrifugation under a force of 1400 G for 4 hours.

Example 20

10 g of micronized IRGANOX 1076 having essentially all particles smaller than about 10 microns, 20 g of Reheis L-55R, aluminum-magnesium hydroxy carbonate described in Example 14, 20 g of micronized IRGAFOS 168 having essentially all particles smaller than 1 micron and 150 g of Silicone A were blended in a COWLES mixer at 1500 RPM for 5 minutes. The resulting suspension was found to be sufficiently stable to withstand centrifugation under a force of 1400 G for 4 hours.

Example 21

This example illustrates how different ways of dispersing ETHANOX 330, described in Example 11, with a polypropylene homopolymer (HIMONT PROFAX 6801), having a melt index of 0.4, influences the ability of ETHANOX 330 to stabilize the polypropylene against degradation in properties during multiphase extrusions. Sample No. 1 comprised neat HIMONT PROFAX 6801 powder and served as a control. Sample 2 was prepared by dry blending the polypropylene powder (HIMONT PROFAX 6801) and ETHANOX 330. Sample 3 was prepared by mixing an acetone solution of ETHANOX 330 with polypropylene powder (HIMONT PROFAX 6801) and then removing the acetone solvent under reduced pressure. Sample 4 was prepared in accordance with the present invention by suspending ETHANOX 330 in Silicone A, in accordance with Example 11 and blending this suspension with polypropylene powder. Sufficient ETHANOX 330 was added in Samples 2 through 4 to provide 1000 ppm of ETHANOX 330 in the extruded resin.

Resin samples were extruded three times each using an 0.75 inch Brabender single screw extruder operating at 260 °C. A sample was retained after each extrusion for melt index and yellowness index determinations. The results are presented below in Tables III and IV, and demonstrate that resin/antioxidant dispersions made using the suspension of the present invention exhibited better retention of color and melt index than samples prepared by dry blending or dissolving the additive in a solvent and removing the solvent by evaporation.

Table III

Melt Index

| Sample Number | Initial Value | After First Pass | After Second Pass | After Third Pass |
|---|---|---|---|---|
| 1 | 0.16 | 1.84 | >5 | >5 |
| 2 | 0.22 | 0.39 | 0.72 | 0.9 |
| 3 | 0.15 | 0.56 | 0.93 | 0.97 |
| 4 | 0.20 | 0.28 | 0.42 | 0.60 |

Table IV

Yellowness Index

| Sample Number | Initial Value | After First Pass | After Second Pass | After Third Pass |
|---|---|---|---|---|
| 1 | 0.06 | 3.71 | 7.31 | * |
| 2 | 0.96 | 7.79 | 10.25 | 13.05 |
| 3 | 1.53 | 6.04 | 9.44 | 13.11 |
| 4 | -2.76 | 0.03 | 2.72 | 9.80 |

* Sample experienced too much degradation to be tested.

Example 22

This example illustrates how different ways of dispersing a combination of additives, i.e., calcium stearate, IRGAFOS 168, and the micronized ETHANOX 330 of Example 11, each at a level of 800 ppm in the resin, into a polypropylene homopolymer (HIMONT PROFAX 6801) influence the degradation of polymer properties during multiple pass extrusion. Sample 1 was prepared by dry blending powders of the three additives with the polypropylene powder. Sample 2 was prepared by again dry blending powders of the three additives with the polypropylene powder. Sample 2 differed from Sample 1 in using a non-micronized fraction of ETHANOX 330 described in Control 1. Sample 3 was prepreared by blending the polypropylene powder with a solution of the three additives in methylene chloride, and then removing the solvent under a reduced pressure. Sample 4 was made in accordance with the present invention by suspending the micronized ETHANOX 330 in Silicone A using a COWLES mixer. The suspension was then added, with the other two additives, to the polypropylene powder and mixed well. The four samples were extruded first on a Werner & Pfleiderer 30 mm twin screw extruder operating at 275°C, and then twice on the Brabender extruder used in Example 21. Plaques were prepared by melt compression at 165°C and yellowness index of each plaque was measured. The results are presented below in Table V. As above, best results were obtained using the improved dispersion process of the present invention (Sample 4).

Table V

Yellowness Index

| Sample Number | Initial Value | After Third Pass |
|---|---|---|
| 1 | 1.6 | 11.5 |
| 2 | -0.3 | 10.5 |
| 3 | 0.04 | 9.9 |
| 4 | -1.37 | 8.5 |

Example 23

Using the same composition as in Example 22, four samples were prepared as follows: Samples 1 and 2 were prepared by blending polypropylene powder with calcium stearate powder, powdered IRGAFOS 168 and a suspension of ETHANOX 330 in Silicone A. The weight average particle size of ETHANOX 330 of Samples 1 and 2 was 5 and 10 microns, respectively. Sample 3, which was not a suspension, was prepared by blending polypropylene powder with the three additives and the same amount of Silicone A as used in the preparation of Samples 1 and 2. The weight average particle size of ETHANOX 330 of Sample 3 was 10 microns. Finally, Sample 4 was prepared simply by dry blending the polypropylene powder with the three solid additives. Using the same processes as in Example 22, the samples were extruded and plaques were prepared for determining yellowness index. The results are shown below in Table VI.

Table VI

Yellowness Index

| Sample Number | After Third Pass |
|---|---|
| 1 | 10.8 |
| 2 | 11.5 |
| 3 | 13.7 |
| 4 | 13.8 |

Example 24

Again, using the same additives and resin as in Example 22, three samples were prepared as follows: Sample 1 was prepared by dry blending the polypropylene powder with the three additives. Sample 2 was prepared by pre-suspending the ETHANOX 330 in Silicone A prior to blending with the polypropylene powder. Sample 3 was prepared by pre-suspending the ETHANOX 330 in a silicone fluid having hydroxypropyl groups ($MD_{10}D'_{10}M$). Using the same processes as in Example 22, the samples were extruded and plaques were prepared for determining yellowness index. The results are shown in Table VII.

Table VII

Yellowness Index

| Sample Number | Initial Value | After Third Pass |
|---|---|---|
| 1 | 2.03 | 13.8 |
| 2 | 0.74 | 11.5 |
| 3 | 0.634 | 11.7 |

Example 25

Fifty grams of micronized ETHANOX 330, described in Example 1, and 150 grams of Silicone A were admixed, for 5 minutes, in a COWLES mixer which was operating at 1500 revolutions per minute.

The resultant dispersion was then removed from the COWLES mixer and tested as to viscosity and stability.

Viscosity - 4950 centipoise at a shear rate of 5.83 reciprocal seconds;
4350 centipoise at a shear rate of 92.7 reciprocal seconds

Stability - the dispersion was still stable after 4 hours of centrifugation under a force of 1400 G

Example 26

Fifty grams of micronized ETHANOX 330, described in Example 1 and 50 grams of Silicone A were admixed, for 5 minutes, in a COWLES mixer which was operating at 1500 revolutions per minute.

The resultant dispersion was then removed from the COWLES mixer and tested as to viscosity and stability.

Viscosity - 62690 centipoise at a shear rate of 5.83 reciprocal seconds;
30350 centipoise at a shear rate of 92.7 reciprocal seconds

Stability - the dispersion was still stable after 4 hours of centrifugation under a force of 1400 G

Example 27

Fifty grams of non-micronized ETHANOX 330, described in Control 1 and 150 grams of Silicone A were admixed, for 5 minutes, in a COWLES mixer which was operating at 1500 revolutions per minute.

The resultant dispersion was then removed from the COWLES mixer and tested as to viscosity and stability.

Viscosity - 4700 centipoise at a shear rate of 5.83 reciprocal seconds;

Stability - the dispersion was still stable after 1 hour of centrifugation under a force of 100 G
about 60 percent of the dispersion settled after 4 hours of centrifugation under a force of 700 G
about 60 percent of the dispersion settled after one hour of centrifugation under a force of 1400 G

Example 28

Twenty-five grams of micronized ETHANOX 330, described in Example 1, 25 grams of non-micronized ETHANOX 330, described in Control 1, and 150 grams of Silicone A were admixed, for 5 minutes, in a COWLES mixer which was operating at 1500 revolutions per minute.

The resultant dispersion was then removed from the COWLES mixer and tested as to viscosity and stability.

Viscosity - 4600 centipoise at a shear rate of 5.83 reciprocal seconds
3900 centipoise at a shear rate of 92.7 reciprocal seconds

Stability - the dispersion was still stable after 4 hours of centrifugation under a force of 1400 G

The weight fraction of particles from the larger particle size population was 50 percent and the ratio of the average diameter of the particles in the larger particle size population to the average diameter of the particles in the smaller particle size population was 12.9.

Comparison with Example 27 shows the advantage of mixed particle sizes with respect to dispersion stability, as established by this example.

Comparison with Example 25 shows the advantage of mixed particle sizes with respect to dispersion viscosity, as established by this example.

Example 29

Twenty-five grams of ETHANOX 330, described in Example 1, 25 grams of non-micronized ETHANOX 330, described in Control 1, and 50 grams of Silicone A were admixed, for 5 minutes, in a COWLES mixer which was operating at 1500 revolutions per minute.

The resultant dispersion was then removed from the COWLES mixer and tested as to viscosity and stability.

Viscosity - 25670 centipoise at a shear rate of 5.83 reciprocal seconds
18320 centipoise at a shear rate of 92.7 reciprocal seconds

Stability - the dispersion was still stable after 4 hours of centrifugation under a force of 1400 G

Comparison with Example 26 shows the advantage of mixed particle sizes with respect to viscosity, as established by this example.

It is to be noted that the disclosure of copending application Serial No. 512,411 is incorporated herein by reference.

## Claims

1. A stable suspension comprising a solid phase and a liquid phase, the said solid phase consisting essentially of a mixture of two populations of particles having different average particle sizes, such that the ratio of the average diameter of the particles in the larger particle size population to the average diameter of the particles in the smaller particle size population is at least about 2 and the weight of particles from the larger particle size population is from about 30 percent to about 90 percent of the weight of all the particles, and at least about 95 percent by weight of said particles have a particle size of less than about 150 microns and at least about 20 percent of said particles have a particle size of less than about 30 microns.

2. Suspension as defined in claim 1 wherein said average diameter ratio is from about 2 to about 100.

3. Suspension as defined in any one of claims 1 and 2 wherein at least about 95 percent by weight of said particles have a particle size of less than about 100 microns and at least about 35 percent of said particles have a particle size of less than about 10 microns.

4. A stable suspension comprising, as the solid phase, particles of a stabilizer for thermoplastic resins and, as the liquid phase of said suspension, a liquid silicone, a liquid stabilizer for thermoplastic resins, a liquid hydroxylated polyoxyalkylene or alkoxy end-blocked products thereof, a liquid poly(alpha-olefin) or hydrogenated products of said poly(alpha-olefin); or mixtures thereof.

5. Suspension as defined in claim 4 wherein at least about 95 percent by weight of said particles have a particle size of less than about 150 microns and at least about 20 percent by weight of said particles have a particle size of less than about 30 microns, and, preferably, at least about 95 percent by weight of said particles have a particle size of less than about 100 microns and at least about 35 percent by weight of said particles have a particle size of less than about 10 microns.

6. Suspension as defined in any one of claims 4 and 5 wherein said solid phase consists essentially of a mixture of two populations of particles having different average particle sizes, such that the ratio of the average diameter of the particles in the larger particle size population to the average diameter of the particles in the smaller particle size population is at least about 2 and the weight of particles from the larger particle size population is from about 30 percent to about 90 percent of the weight of all the particles.

**7.** Suspension as defined in claim 6 wherein said average diameter ratio is from about 2 to about 100.

**8.** Suspension as defined in any one of claims 4 to 7 wherein the liquid phase of said suspension comprises a liquid stabilizer for thermoplastic polymers.

**9.** Suspension as defined in claim 8 wherein the said liquid stabilizer is a phosphite, particularly tris-(nonylphenyl)phosphite.

**10.** Suspension as defined in any one of claims 8 and 9, containing particles of (1,3,5-trimethyl)-2,4,6-tris-(3,5-di-tert-butyl-4-hydroxybenzyl)benzene and/or particles of (tetrakis[methylene-3-(3',5'-di-tert-butyl-4'-hydroxyphenyl)propionate]methane.

**11.** Suspension as defined in any one of claims 4 to 7 wherein the liquid phase of said suspension comprises a liquid hydroxylated polyoxyalkylene or alkoxy end-blocked products thereof.

**12.** Suspension as defined in claim 11 wherein the said hydroxylated polyoxyalkylene is a hydroxylated polyoxypropylene or has the formula:

$$HO-(-CH_2-CH_2O-)_a-H$$

wherein a is at least 1.

**13.** Suspension as defined in claim 11 wherein said hydroxylated polyoxyalkylene comprises ethylene oxide and propylene oxide units and/or has the formula:

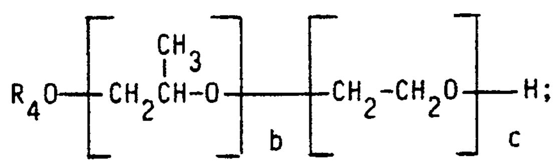

wherein $R_4$ is hydrogen or alkyl of 1 to 6 carbon atoms inclusive; b has a value of at least one and c may be zero or at least one.

**14.** Suspension as defined in claim 11 wherein the said hydroxylated polyoxyalkylene is a preferably butanol initiated polymer of propylene oxide having the generalized formula:

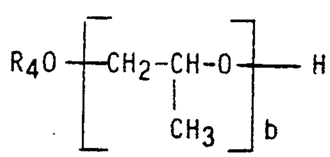

wherein $R_4$ and b are as defined in claim 13, $R_4$ being preferably butyl.

**15.** Suspensions as defined in any one of claims 11 to 14 containing particles of (1,3,5-trimethyl)-2,4,6-tris-(3,5-di-tert-butyl-4-hydroxybenzyl)benzene and/or particles of (tetrakis[methylene-3-(3',5'-di-tert-butyl-4'-hydroxyphenyl)propionate]methane.

**16.** Suspension as defined in any one of claims 4 to 7 wherein the liquid phase of said suspension comprises a liquid poly(alpha-olefin) or hydrogenated products thereof.

**17.** Suspension as defined in claim 16 containing particles of (1,3,5-trimethyl)-2,4,6-tris(3,5-di-tert-butyl-4-hydroxybenzyl)benzene.

**18.** Suspension as defined in any one of claims 16 and 17 wherein said poly(alpha-olefin) is a copolymer of decene-1 and octene-1 or hydrogenated products thereof.

**19.** Suspension as defined in any one of claims 4 to 7 wherein the liquid phase of said suspension comprises a silicone, preferably a polyorganosiloxane polymer with a suspension stability enhancing polar group bonded thereto.

**20.** Suspension as defined in claim 19 wherein said polar group is a monovalent organic radical containing a moiety selected from hydroxy, hydroxyalkyl, carboxyl, amino, amide, carbamate, aldehyde, nitrile, phenol, vicinal epoxy, alkoxy, phosphite, phosphine, phosphonate, carboxylic acid ester, polyether, polyalkylene oxide, thiol and sulfide.

**21.** Suspension as defined in claim 20 wherein said polyorganosiloxane polymer has the formula:

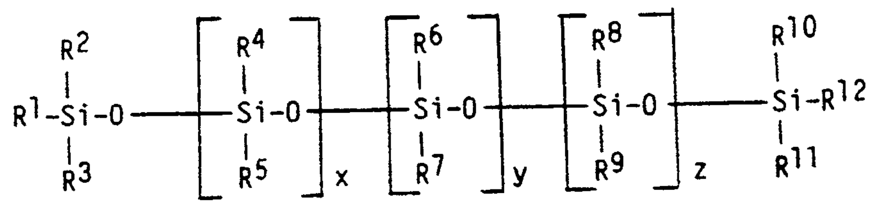

where the substituents $R^1$ through $R^{12}$ can be the same or different and are selected from alkyl groups, aryl groups and monovalent organic radicals containing a moiety selected from hydroxy, hydroxyalkyl, carboxyl, amino, amide, carbamate, aldehyde, nitrile, phenol, vicinal epoxy, alkoxy, phosphite, phosphine, phosphonate, carboxylic acid ester, polyether, polyalkylene oxide, thiol, and sulfide, and where x, y and z can be the same or different and the sum of x, y and z is between 1 and 3000 and wherein, preferably, $R^1$ through $R^6$ and $R^9$ through $R^{12}$ are selected from alkyl and aryl groups, $R^7$ and $R^8$ are selected from said monovalent organic radicals, x has a value between 0 and 2000, y has a value between 1 and 500 and z has a value between 0 and 500.

**22.** Suspension as defined in any one of claims 19 to 21 wherein said resin stabilizer is selected from a phosphite, particularly a bis-substituted pentaerythritol diphosphite, a phosphonite, a hindered phenol, a thiodipropionate, a hindered amine, a benzophenone stabilizer and mixtures thereof.

**23.** Suspension as defined in any one of claims 19 to 21 wherein said resin stabilizer is selected from tri-n-dodecylphosphite, bis-(2,4-di-t-butylphenyl) pentaerythritol diphosphite, tris(nonylphenyl) phosphite, tris-(di-nonylphenyl) phosphite, octadecyl 3-(3',5'-di-t-butyl-4-hydroxyphenyl) propionate, dilauryl thiodipropionate, tetrakis-[methylene-3(3',5'-di-tert-butyl-4'-hydroxyphenyl)propionate] methane, 1,3,5-trimethyl-2,4,6-tris(3,5-di-tert-butyl-4-hydroxybenzyl)benzene, 2,2'-ethylidene-bis(4,6-di-t-butyl)phenol N,N'-diphenyl-N,N'-di-2-naphthyl-p-phenylene-diamine and mixtures thereof.

**24.** Suspension as defined in claim 19 wherein said polyorganosiloxane is a polydimethylsiloxane having pendant polyether moieties and/or pendant hydroxyalkyl moieties and said resin stabilizer is 1,3,5-trimethyl-2,4,6-tris(3,5-di-tert-butyl-4-hydroxybenzyl) benzene.

**25.** A composition comprising a stable suspension as defined in any one of claims 1 to 24 and a thermoplastic resin, particularly a thermoplastic polymer of an olefin and preferably a copolymer of ethylene and butene-1.